# EUROPEAN PATENT APPLICATION

(11) **EP 3 533 662 A1**
(43) Date of publication of application: **04.09.2019**
(21) Application number: 19154051.7
(22) Date of filing: 28.01.2019
(51) Int. Cl.: B60L 53/80, G06Q 10/08, B60L 53/60, B60L 58/12, B60L 53/30, B60L 53/66

(54) **METHOD AND ELECTRONIC DEVICE FOR MANAGING POWER SUPPLY DEVICES**

(30) Priority: 02.03.2018 TW 10707000
(71) Applicant: Kwang Yang Motor Co., Ltd., Kaohsiung City 80794 (TW)
(72) Inventor: LIN, Chen-Sheng, 80794 Kaohsiung (TW); TENG, Hsin-Liang, 82053 Kaohsiung City (TW); CHUANG, Po-Yu, 11501 Taipei City (TW); LIN, Jen-Chiun, 11501 Taipei City (TW); CHEN, Yuh-Rey, 11501 Taipei City (TW); LIU, Te-Chuan, 11501 Taipei City (TW)
(74) Representative: Regimbeau

(57) **Abstract**

A system (100) for managing power supply devices includes an electronic device (1), a server (2) and plural power supply devices including a first power supply device (3A) and a second power supply device (3B) . The electronic device (1) is configured to enable the first power supply device (3A) to delete a part of data from its storage, and enable the second power supply device (3B) to store therein a portion of data that was relevant to the power supply device (3A).

## Description

The disclosure relates to management of power supply devices, and more particularly to information transfer between power supply devices.

With people's growing environmental awareness, electric vehicles (EVs) have been developed and are gaining public attention.

Conventional electric vehicles use rechargeable batteries. Once a rechargeable battery is exhausted or damaged, a replacement must be made at fixed charging stations. Due to significant cost in both time and money for establishing a charging station, the number of available charging stations is often not proportional to the number of running electric vehicles. In this situation, for many EV users, it takes a long time to get to a charging station, and the user may have to wait in line for battery replacement. Such inconvenience may suppress people's willingness to purchase electric vehicles, and is thus unfavorable to the EV industry.

Therefore, the present disclosure aims at providing a solution that is contributive to the provision of battery replacement/exchange facilities that can be quickly deployed at a low cost.

Therefore, an object of the disclosure is to provide a method and an electronic device for managing power supply devices that can alleviate at least one of the drawbacks of the prior art.

According to the disclosure, the method is to be implemented by an electronic device communicating with a plurality of power supply devices and a server. Each of the power supply devices has a unique battery identifier. The server stores a plurality of pieces of battery information, each of which corresponds to a different one of the power supply devices and at least includes the battery identifier of the corresponding power supply device. The method includes steps of: obtaining, from a first one of the power supply devices, the battery identifier of the first one of the power supply devices; sending, to the server, a request for one of the pieces of battery information stored in the server that corresponds to the battery identifier of the first one of the power supply devices; receiving, from the server, the piece of battery information that corresponds to the battery identifier of the first one of the power supply devices; sending, to the first one of the power supply devices, a disassociation instruction for deleting a part of data stored in the first one of the power supply devices; and sending, to a second one of the power supply devices, a portion of the piece of battery information received from the server for storage in the second one of the power supply devices .

According to the disclosure, the electronic device is configured to communicating with a server to manage a plurality of power supply devices. Each of the power supply devices has a unique battery identifier. The server stores a plurality of pieces of battery information, each of which corresponds to a different one of the power supply devices and at least includes the battery identifier of the corresponding power supply device. The electronic device includes a communication module for communication with the server and the power supply devices. The communication module is configured to connect a communication network to communicate with the server. The electronic device further includes a processing module electrically connected to the communication module. The electronic device is configured to obtain, from a first one of the power supply devices through the communication module, the battery identifier of the first one of the power supply devices . The electronic device is configured to send a request for one of the pieces of battery information stored in the server that corresponds to the battery identifier of the first one of the power supply devices to the server through the communication module. The electronic device is configured to receive the piece of battery information that corresponds to the battery identifier of the first one of the power supply devices from the server through the communication module. The electronic device is configured to send a disassociation instruction to the first one of the power supply devices through the communication module in order to delete a part of data stored in the first one of the power supply devices. The electronic device is also configured to send a portion of the piece of battery information received from the server to a second one of the power supply devices through the communication module for storage in the second one of the power supply devices.

Other features and advantages of the disclosure will become apparent in the following detailed description of the embodiment (s) with reference to the accompanying drawings, of which:
Figure 1 is a block diagram which exemplarily illustrates a system for managing power supply devices according to an embodiment;
Figure 2 is a flow chart which exemplarily illustrates a first part of a method for managing power supply devices according to an embodiment;
Figure 3 is a flow chart which exemplarily illustrates a second part of the method for managing power supply devices according to an embodiment; and
Figure 4 is a flow chart which exemplarily illustrates a process for determining whether a power supply device is associated with pieces of battery information stored in a server according to an embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

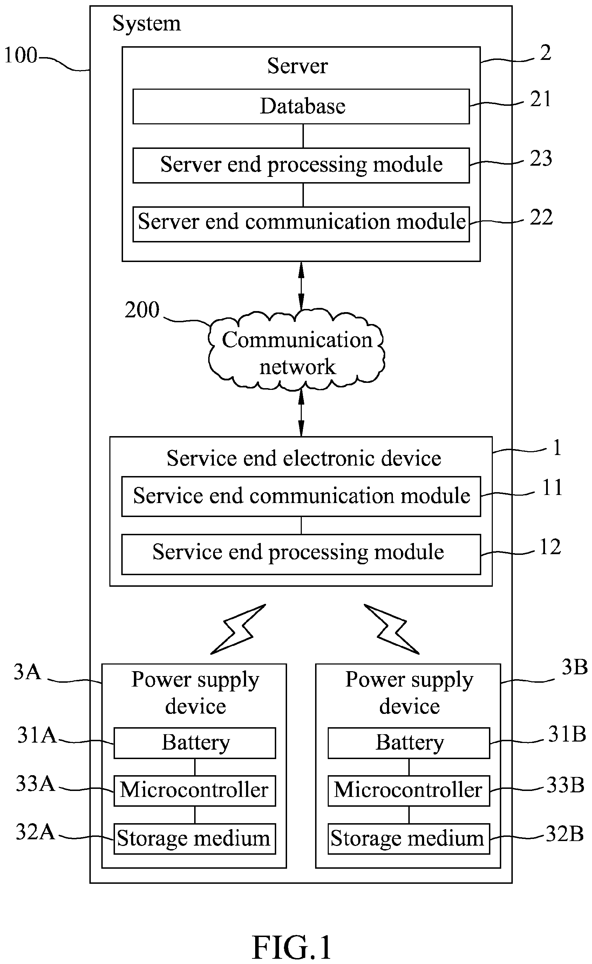

Figure 1 is a block diagram which exemplarily illustrates a system 100 for managing power supply devices according to an embodiment. Referring to Figure 1, the system 100 includes a service end electronic device 1 (may be shortened to electronic device in parts of this disclosure), a server 2 and plural power supply devices including power supply devices 3A and 3B. The service end electronic device 1 is configured to communicate with the server 2 over a communication network 200 and is configured to communicate with the power supply devices 3A and 3B via, for example, near-field communication (NFC).

According to an embodiment, the service end electronic device 1 includes a service end communication module 11 and a service end processing module 12 electrically coupled to the service end communication module 11 (the service end communication module 11 and the service end processing module 12 may be shortened to communication module and processing module respectively in parts of this disclosure). In an embodiment, the service end electronic device 1 is a mobile device of an EV vendor. In an embodiment, the service end electronic device 1 is a mobile device at a battery exchange service location affiliated with or authorized by the EV vendor. The service end electronic device 1 may be implemented as, for example, an NFC-enabled smart phone or an NFC-enabled tablet computer, but the disclosure is not limited thereto.

According to an embodiment, the server 2 includes a database 21, a server end communication module 22 and a server end processing module 23 electrically coupled to the database 21 and the server end communication module 22. The server 2 may be implemented as, for example, a personal computer or a cloud host, but the disclosure is not limited thereto. The server end processing module 23 may be implemented as a processor, a central processing unit (CPU), a digital signal processor (DSP), a system on a chip (SoC) or any other device having computation capability to carry out the functions of the server end processing module 23 of this disclosure.

According to an embodiment, each of the power supply devices, including the power supply devices 3A and 3B, has a unique battery identifier. The database 21 of the server 2 stores a plurality of pieces of battery information that each correspond to a different power supply device that has been associated with at least one carrier device (i.e., the at least one carrier device that has been allowed to use the power supply device) . The carrier device is for example an electric vehicle. For example, if the power supply device 3A is associated with one carrier device and if the power supply device 3B is not associated with any carrier device, the pieces of battery information stored in the server 2 would include a piece of battery information corresponding to the power supply device 3A but not a piece of battery information corresponding to the power supply device 3B. According to an embodiment, each of the pieces of battery information includes the battery identifier of the corresponding power supply device and at least one carrier identifier of the at least one carrier device associated with the corresponding power supply device. According to a further embodiment, each of the pieces of battery information also includes a user identifier corresponding to a user of the corresponding power supply device.

According to an embodiment, each of the power supply devices 3 includes a battery, storage medium (e.g., a memory device) and a microcontroller electrically coupled to the battery and the storage medium. For example, the power supply device 3A includes a battery 31A, storage medium 32A and a microcontroller 33A, and the power supply device 3B includes a battery 31B, storage medium 32B and a microcontroller 33B. The storage medium and the microcontroller may be implemented as a Battery Management System (BMS), but the disclosure is not limited thereto.

According to an embodiment, when a power supply device is associated with at least one carrier device, the storage medium thereof stores the battery identifier thereof and at least one carrier identifier of the at least one carrier device. On the other hand, when a power supply device is not associated with any carrier device, its storage medium stores the battery identifier thereof and no carrier identifier. According to a further embodiment, when a power supply device is associated with at least one carrier device, its storage medium also stores a corresponding user identifier, which would not be stored in the storage medium when the power supply device is not associated with any carrier device. In an embodiment, the data stored in the storage medium of the power supply device that is associated with at least one carrier device is the same as the piece of battery information stored in the server 2 that corresponds to the power supply device.

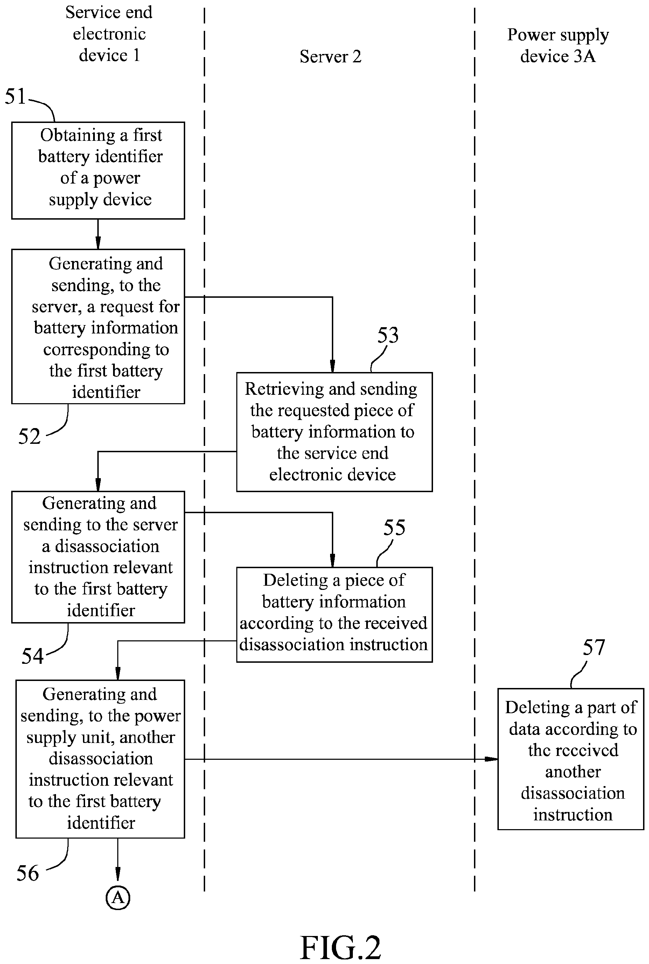

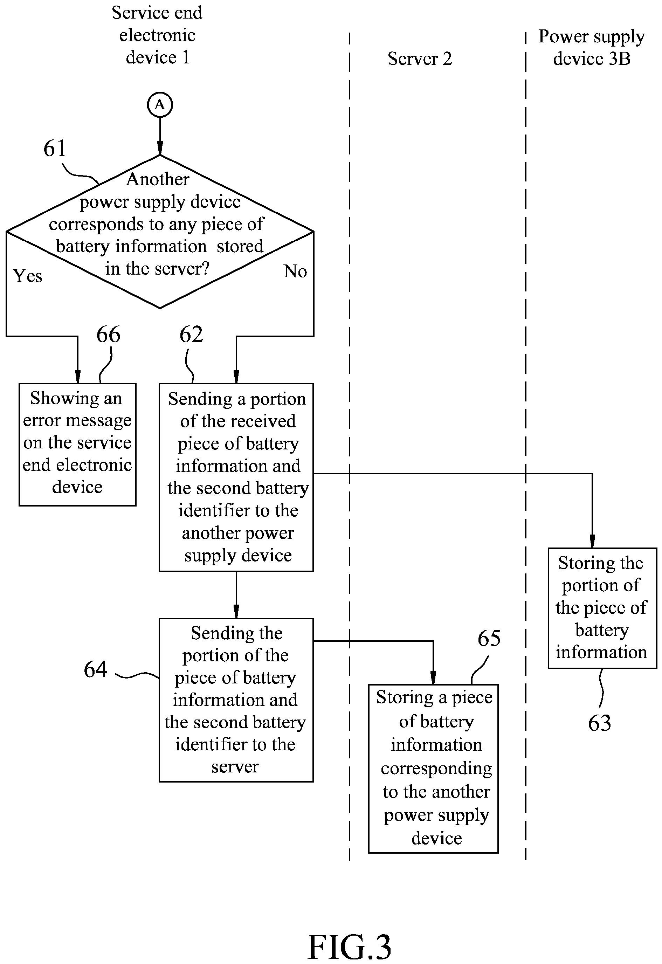

A method for managing power supply devices may be implemented by the system 100 illustrated in Figure 1. A first part of the method that includes steps 51-57 and a second part of the method that includes steps 61-65 are illustrated in Figures 2 and 3, respectively, according to an embodiment.

Reference is now made to Figure 2. In the following description, it is assumed that, at the beginning of this process, the power supply device 3A is associated with at least one carrier device and is to be replaced by the power supply device 3B which is supposed to not be associated with any carrier device. As will be described in more detail below, the part of the method illustrated in Figure 2 emphasizes on deleting stored information from the power supply device to be replaced, here, the power supply device 3A.

In step 51, the service end processing module 12 obtains a first battery identifier of the power supply device 3A from information received by the service end communication module 11 from the power supply device 3A via, for example, near-field communication. According to another embodiment, the first battery identifier may be obtained by scanning a Quick Response Code (i.e., QR code) on the power supply device 3A as well.

In step 52, the service end processing module 12 generates a request for battery information corresponding to the first battery identifier, and the communication module 11 sends the request to the server 2 over the communication network 200.

In step 53, the server end processing module 23 receives, through the server end communication module 22, the request sent over the communication network 200. Then, the server end processing module 23 retrieves a piece of battery information stored in the database 21 that corresponds to the first battery identifier (i.e., corresponds to the power supply device 3A), and sends, through the server end communication module 22, the piece of battery information to the electronic device 1 over the communication network 200.

In step 54, the service end processing module 12 receives, through the service end communication module 11, the piece of battery information sent over the communication network 200, and generates a disassociation instruction that contains the first battery identifier. Then, the service end communication module 11 sends the disassociation instruction thus generated to the server 2 over the communication network 200.

In step 55, the server end processing module 23 receives the disassociation instruction sent over the communication network 200 through the server end communication module 22, and deletes the piece of battery information corresponding to the battery identifier contained in the received disassociation instruction (i.e., the first battery identifier) from the database 21.

In step 56, the service end processing module 12 generates another disassociation instruction relevant to the first battery identifier, and the service end communication module 11 sends the another disassociation instruction to the power supply device 3A via, for example, near-field communication.

In step 57, the microcontroller 33A of the power supply device 3A receives the another disassociation instruction via, for example, near-field communication, and deletes a part of data stored in its storage medium 32A according to the received another disassociation instruction. According to an embodiment, the deleted data includes at least one carrier identifier originally stored in the storage medium 32A (the at least one carrier device that corresponds to the at least one carrier identifier being originally allowed to use the power supply device 3A), and does not include the battery identifier. According to a further embodiment, the deleted data also includes the user identifier.

One of ordinary skill in the relevant art would appreciate that it is not necessary for steps 54-57 to be performed in exactly the order illustrated in Figure 2. Specifically, the sequence of steps 54 and 55 may start and/or end earlier than, simultaneously with, or later than the sequence of steps 56 and 57.

Reference is now made to Figure 3. As will be described in more detail below, the part of the method illustrated in Figure 3 emphasizes on writing information to the replacement power supply device, here, the power supply device 3B.

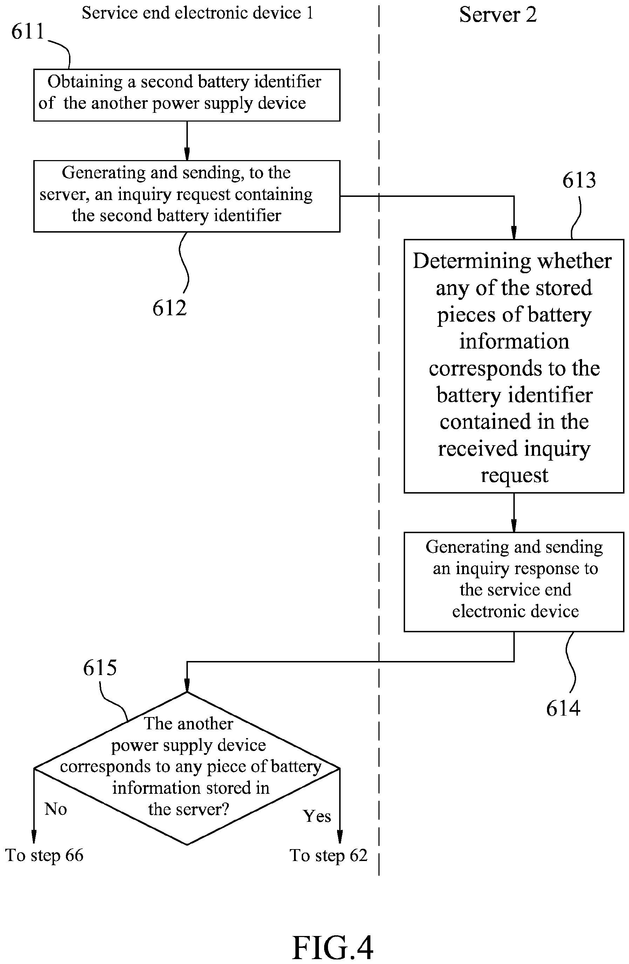

In step 61, the service end processing module 12 determines whether the power supply device 3B corresponds to any piece of battery information stored in the server 2. If so, the process proceeds to step 66. Otherwise, the process proceeds to step 62. The process of step 61 is detailed in Figure 4, which exemplarily illustrates sub-steps 611-615 of step 61.

Turing now to Figure 4, in sub-step 611, the service end processing module 12 obtains a second battery identifier of the power supply device 3B from information received by the communication module 11 from the power supply device 3B via, for example, near-field communication. According to another embodiment, the second battery identifier may also be obtained by scanning a QR code on the power supply device 3B.

In sub-step 612, the service end processing module 12 generates an inquire request that contains the second battery identifier, and the service end communication module 11 sends the inquire request to the server 2 over the communication network 200.

In sub-step 613, the server end processing module 23 receives, through the server end communication module 22, the inquire request sent over the communication network 200. Then, the server end processing module 23 determines whether any of the stored pieces of battery information in the database 21 corresponds to the battery identifier contained in the received inquire request (i.e., the second battery identifier).

In sub-step 614, the server end processing module 23 generates an inquiry response based on the determination made in sub-step 613, and the server end communication module 22 sends the inquiry response to the electronic device 1 over the communication network 200. According to an embodiment, when it is determined in sub-step 613 that the second battery identifier corresponds to one of the stored pieces of battery information in the database 21, the inquiry response sent to the electronic device 1 indicates not only the determination result but also that it is forbidden to write information into the power supply device 3B. According to an embodiment, when it is determined in sub-step 613 that the second battery identifier corresponds to none of the stored pieces of battery information in the database 21, the inquiry response sent to the electronic device 1 indicates not only the determination result but also that it is allowed to write information into the power supply device 3B.

In sub-step 615, the service end processing module 12 receives, through the service end communication module 11, the inquiry response sent over the communication network 200, and makes a determination as to whether the power supply device 3B corresponds to any piece of battery information stored in the server 2 based on the received inquiry response.

Turning now back to Figure 3, in step 62, the service end processing module 12 sends, through the service end communication module 11, a portion of the piece of battery information received in step 54 of Figure 2 and the second battery identifier to the power supply device 3B via, for example, near-field communication. According to an embodiment, the portion of the piece of battery information includes information of at least one carrier identifier, and does not include any battery identifier. According to a further embodiment, the portion of the piece of battery information also includes information of the user identifier. In an embodiment, the portion of the piece of battery information corresponds to the deleted data of step 57.

In this case, the at least one carrier device that corresponds to the at least one carrier identifier of the deleted data was originally but is no longer allowed to use the power supply device 3A, and is, now, to be newly allowed to use the power supply device 3B.

In step 63, after the power supply device 3B receives the portion of the piece of battery information and the second battery identifier via, for example, near-field communication, the microcontroller 33B of the power supply device 3B stores the portion of the piece of battery information in the storage medium 32B.

In step 64, the service end processing module 12 sends, through the service end communication module 11, the same portion of the piece of battery information and the second battery identifier to the server 2 over the communication network 200.

In step 65, the server end processing module 23 receives, through the server end communication module 22, the portion of the piece of battery information and the second battery identifier sent over the communication network 200, and stores a piece of battery information corresponding to the power supply device 3B that contains information of the received second battery identifier and the received portion of the piece of battery information.

According to an embodiment, the portion of the piece of battery information and the second battery identifier are first combined into the piece of battery information corresponding to the power supply device 3B and then sent to the power supply device 3B in step 62. In this case, the microcontroller 33B may directly store the received piece of battery information in the storage medium 32B in step 63. Similarly, the portion of the piece of battery information and the second battery identifier may be sent to the server 2 in step 64 as the piece of battery information corresponding to the power supply device 3B, and the server end processing module 23 may directly store the received piece of battery information in the database 21.

One of ordinary skill in the relevant art would appreciate that it is not necessary for steps 62-65 to be performed in exactly the order illustrated in Figure 3. Specifically, the sequence of steps 62 and 63 may start and/or end earlier than, simultaneously with, or later than the sequence of steps 64 and 65.

In step 66, the service end processing module 12 shows an error message on a screen of the service end electronic device 1. According to an embodiment, the error message indicates that it is forbidden to write information into the power supply device 3B.

In an embodiment, the method may further include several optional steps subsequent to step 66. According to an embodiment, the method further includes three optional steps after step 66. In a first one of the three optional steps, the service end processing module 12 may generate a compulsory write instruction including the portion of the piece of battery information received in step 54 of Figure 2 and the second battery identifier, and the communication module 11 may send the compulsory write instruction to the power supply device 3B via, for example, near-field communication. In a second one of the three optional steps, the microcontroller 33B of the power supply device 3B stores, in response to receiving the compulsory write instruction, the portion of the piece of battery information in the storage medium 32B. In a third one of the three optional steps, the database 21 of the server 2 is updated to store a piece of battery information corresponding to the power supply device 3B due to the generated compulsory write instruction.

To sum up, in the method for managing power supply devices as disclosed above, when a power supply device 3A is needed to be replaced by another power supply device 3B, a service end electronic device 1 (e.g., a mobile device of the vendor) first receives a piece of battery information corresponding to the power supply device 3A from the server 2 by using the battery identifier of the power supply device 3A obtained (e.g., by NFC or QR code scanning) from the power supply device 3A. Then, the service end electronic device 1 instructs the power supply device 3A to delete a part of data from its storage, sends a portion of the received piece of battery information (including, for example, a carrier identifier that is allowed or going to use the power supply device 3B) to the power supply device 3B for storage therein, and instructs the server 2 to delete the piece of battery information corresponding to the power supply device 3A and store a piece of battery information corresponding to the replacement power supply device 3B (composed by, for example, the portion of the piece of battery information originally corresponding to the power supply device 3A (e.g., the carrier identifier) and the battery identifier of the power supply device 3B). Adaption of such method in the procedure of battery replacement enables the procedure to be faster and easier. Further, battery replacement facilities that operate using such method cost less in both time and money.

In the description above, for the purposes of explanation, numerous specific details have been set forth in order to provide a thorough understanding of the embodiment (s) . It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method for managing power supply devices that is to be implemented by an electronic device (1) communicating with a plurality of power supply devices and a server (2), each of the power supply devices having a unique battery identifier, the server (2) storing a plurality of pieces of battery information, each of which corresponds to a different one of the power supply devices and at least includes the battery identifier of the corresponding power supply device, the method being **characterized by** steps of:
obtaining, from a first one of the power supply devices (3A), the battery identifier of the first one of the power supply devices (3A);
sending, to the server (2), a request for one of the pieces of battery information stored in the server (2) that corresponds to the battery identifier of the first one of the power supply devices (3A);
receiving, from the server (2), the piece of battery information that corresponds to the battery identifier of the first one of the power supply devices (3A);
sending, to the first one of the power supply devices (3A), a first disassociation instruction for deleting a part of data stored in the first one of the power supply devices (3A); and
sending, to a second one of the power supply devices (3B), a portion of the piece of battery information received from the server (2) for storage in the second one of the power supply devices (3B).

2. The method of claim 1, **characterized by** a step of:
sending, after the step of receiving the piece of battery information, a second disassociation instruction containing the battery identifier of the first one of the power supply devices (3A) to the server (2) for deleting from the server (2) the piece of battery information that corresponds to the battery identifier of the first one of the power supply devices (3A).

3. The method of claim 1, **characterized by** a step of determining, before the step of sending a portion of the piece of battery information, whether the second one of the power supply devices (3B) corresponds to any of the pieces of battery information stored in the server (2),
wherein, when it is determined that the second one of the power supply devices (3B) corresponds to none of the pieces of battery information stored in the server (2), the step of sending a portion of the piece of battery information is implemented.

4. The method of claim 3, **characterized in that** the step of determining whether the second one of the power supply devices (3B) corresponds to any of the pieces of battery information stored in the server (2) includes sub-steps of:
obtaining, from the second one of the power supply devices (3B), the battery identifier of the second one of the power supply devices (3B);
sending an inquiry request containing the battery identifier of the second one of the power supply devices (3B) to the server (2) in order to inquire whether the second one of the power supply devices (3B) corresponds to any of the pieces of battery information stored in the server (2);
receiving, from the server (2), an inquiry response that indicates whether the second one of the power supply devices (3B) corresponds to any of the pieces of battery information stored in the server (2); and
based on the inquiry response received from the server (2), determining whether the second one of the power supply devices (3B) corresponds to any of the pieces of battery information stored in the server (2) .

5. The method of claim 1, **characterized by** a step of:
obtaining, before the step of sending a portion of the piece of battery information, the battery identifier of the second one of the power supply devices (3B) from the second one of the power supply devices (3B);
wherein the step of sending a portion of the piece of battery information includes sending, to the second one of the power supply devices (3B), the battery identifier of the second one of the power supply devices (3B) and the portion of the piece of battery information received from the server (2), the portion of the piece of battery information including a carrier identifier corresponding to a carrier device that is newly allowed to use the second one of the power supply devices (3B) and not including the battery identifier of the first one of the power supply devices (3A).

6. The method of claim 5, **characterized by** a step of:
sending the battery identifier of the second one of the power supply devices (3B) and the portion of the piece of battery information to the server (2) to be stored as a new piece of battery information therein.

7. The method of claim 1, **characterized in that** each of the pieces of battery information stored in the server (2) further includes a user identifier corresponding to a user of the corresponding power supply device, and that the portion of the piece of battery information to be sent to the second one of the power supply devices (3B) includes the user identifier.

8. An electronic device (1) for communicating with a server (2) to manage a plurality of power supply devices, each of the power supply devices having a unique battery identifier, the server (2) storing a plurality of pieces of battery information, each of which corresponds to a different one of the power supply devices and at least includes the battery identifier of the corresponding power supply device, the electronic device (1) including:
a communication module (11) for communication with the server (2) and the power supply devices, said communication module (11) being configured to connect a communication network (200) to communicate with the server (2),
the electronic device (1) being **characterized by**:
a processing module (12) electrically connected to said communication module (11) and configured to
obtain, from a first one of the power supply devices (3A) through said communication module (11), the battery identifier of the first one of the power supply devices (3A),
send a request for one of the pieces of battery information stored in the server (2) that corresponds to the battery identifier of the first one of the power supply devices (3A) to the server (2) through said communication module (11),
receive the piece of battery information that corresponds to the battery identifier of the first one of the power supply devices (3A) from the server (2) through said communication module (11),
send a first disassociation instruction to the first one of the power supply devices (3A) through said communication module (11) in order to delete a part of data stored in the first one of the power supply devices (3A), and
send a portion of the piece of battery information received from the server (2) to a second one of the power supply devices (3B) through said communication module (11) for storage in the second one of the power supply devices (3B).

9. The electronic device (1) of claim 8, **characterized in that** said processing module (12) is further configured to:
send a second disassociation instruction containing the battery identifier of the first one of the power supply devices (3A) to the server (2) through said communication module (11) in order to delete, from the server (2), the piece of battery information that corresponds to the battery identifier of the first one of the power supply devices (3A).

10. The electronic device (1) of claim 8, **characterized in that** said processing module (12) is further configured to:
determine whether the second one of the power supply devices (3B) corresponds to any of the pieces of battery information stored in the server (2);
send the portion of the piece of battery information to the second one of the power supply devices (3B) through said communication module (11) only when it is determined that the second one of the power supply devices (3B) does not correspond to any of the pieces of battery information stored in the server (2).

11. The electronic device (1) of claim 10, **characterized in that** said processing module (12) is further configured to:
obtain, from the second one of the power supply devices (3B), the battery identifier of the second one of the power supply devices (3B);
send an inquiry request containing the battery identifier corresponding to the second one of the power supply devices (3B) to the server (2) through said communication module (11) in order to inquire whether the second one of the power supply devices (3B) corresponds to any of the pieces of battery information stored in the server (2);
receive, from the server (2) through said communication module (11), an inquiry response that indicates whether the second one of the power supply devices (3B) corresponds to any of the pieces of battery information stored in the server (2); and
based on the inquiry response received from the server (2), determine whether the second one of the power supply devices (3B) corresponds to any of the pieces of battery information stored in the server (2).

12. The electronic device (1) of claim 8, **characterized in that** said processing module (12) is configured to:
obtain, from the second one of the power supply devices (3B) through said communication module (11), the battery identifier of the second one of the power supply devices (3B); and
send, to the second one of the power supply devices (3B) through said communication module (11) for storage in the second one of the power supply devices (3B), the battery identifier of the second one of the power supply devices (3B) and the portion of the piece of battery information received from the server (2), the portion of the piece of battery information including a carrier identifier corresponding to a carrier device that is newly allowed to use the second one of the power supply devices (3B) and not including the battery identifier of the first one of the power supply devices (3A).

13. The electronic device (1) of claim 12, **characterized in that** said processing module (12) is configured to send the battery identifier of the second one of the power supply devices (3B) and the portion of the piece of battery information to the server (2) through said communication module (11) to be stored in the server (2) as a new piece of the battery information.

14. The electronic device (1) of claim 8, **characterized in that** each of the pieces of battery information stored in the server (2) further includes a user identifier corresponding to a user of the corresponding power supply device, and that the portion of the piece of battery information to be sent to the second one of the power supply devices (3B) includes the user identifier.
